# EUROPÄISCHE PATENTSCHRIFT

(11) **EP 1 440 870 B1**
(45) Veröffentlichungstag und Bekanntmachung des Hinweises auf die Patenterteilung: **10.10.2007**
(21) Anmeldenummer: 04000415.2
(22) Anmeldetag: 10.01.2004
(51) Int. Cl.: B62D 25/08, B62D 65/00

(54) **Fahrzeugkarosserie mit zumindest einem Verbindungsbereich**
Vehicle body with at least one attachment zone
Carrosserie de véhicule avec au moins une zone de liaison

(30) Priorität: 27.01.2003 DE 10303022
(43) Veröffentlichungstag der Anmeldung: 28.07.2004
(73) Patentinhaber: Bayerische Motoren Werke Aktiengesellschaft, 80809 München (DE)
(72) Erfinder: Werberger, Stephan, 80937 München (DE); Kremer, Horst, 82269 Geltendorf-Wabern (DE); Gutmann, Timo, 82433 Bad Kohlgrub (DE); Lotter, Ralf, 80469 München (DE); Dragoi, Cristian, 81477 München (DE); Dressler, Bernhard, Dr., 80809 München (DE); Weigl, Günther, 82049 Pullach (DE); Wortberg, Alexander, 80636 München (DE)

(56) Entgegenhaltungen:
- US-A- 4 978 164
- US-A- 5 560 674
- US-A- 5 619 784

## Beschreibung

Die Erfindung betrifft eine Fahrzeugkarosserie mit zumindest einem Verbindungsbereich gemäß des Oberbegriffs des Patentanspruchs 1.

Aus der EP 0 838 388 A1 ist eine Fahrzeugkarosserie bekannt, bei der ein dem Aggregateraum zugeordneter Bereich der Fahrzeugkarosserie asymmetrisch zum Fahrzeugschwerpunkt aus einem gegenüber der übrigen Fahrzeugkarosserie gewichtsreduzierten Werkstoff hergestellt ist. Dazu werden vor allem Beplankungsteile wie die vorderen Kotflügel aus dem gewichtsreduzierten Werkstoff hergestellt. Eine ähnliche Fahrzeugkarosserie ist auch in US 5619784 offenbart.

Aufgrund von Problemen v. a. mit der Korrosion, mit der Wärmedehnung und mit der Betriebsfestigkeit können zur Verbindung eines solchen Bereichs beispielsweise aus Aluminium an die übrige Fahrzeugkarosserie aus Stahl keine Knoten in Mischbauweise verwendet werden. Knoten aus Stahl haben ein hohes Gewicht, während Knoten aus Aluminium je nach Gestaltung mit hohen Kosten und Toleranzen einhergehen. Ferner ist die Festigkeit und Steifigkeit eines Knotens aus Aluminium im Vergleich zu einem Knoten aus Stahl gering.

Aufgabe der Erfindung ist es, eine Verbindung zwischen einer ersten und zumindest einer zweiten Baugruppe einer Fahrzeugkarosserie zu schaffen.

Diese Aufgabe wird durch die Merkmale des Patentanspruchs 1 gelöst.

Erfindungsgemäß ist zumindest an einer ersten Baugruppe im Verbindungsbereich zu einer zweiten Baugruppe zumindest ein flächiger Adapter angebracht, der mit der zweiten Baugruppe oder einem an der zweiten Baugruppe angebrachten Adapter überlappt und im Überlappungsbereich verschweißbar ist. Als Schweißverfahren eignet sich beispielsweise das Punkt-, Lichtbogen-, Schutzgasoder Ultraschallschweißen. Um die Herstellkosten einer Fahrzeugkarosserie so gering wie möglich halten zu können, müssen bei dem Zusammenbau der eigentlichen Fahrzeugkarosserie einzelne Baugruppen schnell und einfach miteinander verbindbar sein. Aus diesem Grund hat sich als Verbindungstechnik bei einer Fahrzeugkarosserie vor allem das Schweißen durchgesetzt. Dieses Verfahren ist allerdings im wesentlichen nur bei Eisenwerkstoffen anwendbar. Bei anderen Werkstoffen wie Aluminium- oder Magnesiumlegierungen sind Schweißverbindungen nicht oder nur sehr begrenzt darstellbar. Derartige Werkstoffe kommen im Fahrzeugbau vermehrt zum Einsatz, um das Gewicht des Fahrzeugs zu reduzieren. Durch die Anbringung zumindest eines schweißbaren Adapters an eine erste Baugruppe lässt sich dieses unabhängig von seinem Material über den Adapter problemlos mit einer zweiten Baugruppe verschweißen. Dabei kann gegebenenfalls auch diese zweite Baugruppe einen Adapter aufweisen, sodass die beiden Baugruppen über ihre Adapter miteinander verschweißbar sind. Der Adapter kann zuvor im Rahmen eines Unterzusammenbaus am Bauteil angebracht werden.

Eine Baugruppe besteht aus zumindest zwei bereits miteinander gefügten Einzelteilen, die als eine Einheit nun mit einer weiteren Baugruppe verbunden werden können. Derartige miteinander zu verbindende Baugruppen einer Fahrzeugkarosserie können günstigerweise eine Fahrgastzelle, ein Vorderwagenmodul, ein Hinterwagenmodul, ein Dachmodul oder ein Frontendmodul sein. Aber auch weitere, nicht explizit aufgeführte Baugruppen eignen sich für die vorgeschlagene Verbindungstechnik.

Aus Gründen der Gewichtsersparnis und / oder unterschiedlicher Anforderungen an verschiedene Baugruppen werden bei manchen Karosserien die einzelnen Baugruppen aus unterschiedlichen Werkstoffen hergestellt. Gemäß einer besonders vorteilhaften Weiterbildung der Erfindung werden die Baugruppen in verschiedenen Fertigungsprozessen hergestellt. Beispielsweise kann eine erste Baugruppe aus Bauteilen aus Aluminiumlegierungen in einem ersten Fertigungsprozess zusammengesetzt werden. Dazu sind relativ hohe Reinheitsanforderungen erforderlich, wie sie im Rohbau einer konventionellen Stahlkarosserie nicht erfüllt werden. Im Rahmen dieses ersten Fertigungsprozesses können beispielsweise Stahlblechstreifen als Adapter an die erste Baugruppe aus Aluminiumlegierungen angebracht werden. Das Verbinden dieser ersten Baugruppe mit einer zweiten Baugruppe, die beispielsweise aus Stahl besteht, kann nun in einem zweiten Fertigungsprozess erfolgen. Für diesen zweiten Fertigungsprozess müssen nur mehr die gewöhnlichen Anforderungen wie im Rohbau einer konventionellen Stahlkarosserie erfüllt werden. Die einzelnen Baugruppen können entsprechend ihrer Anforderungen räumlich voneinander getrennt jeweils unter den erforderlichen Bedingungen zusammengesetzt werden, bevor sie miteinander verbunden werden.

Weitere vorteilhafte Ausgestaltungen sind Gegenstand von Unteransprüchen.

In der Zeichnung ist ein Ausführungsbeispiel der Erfindung dargestellt, anhand dessen die Erfindung im folgenden näher beschrieben wird. Die einzelnen Figuren zeigen in schematischer Darstellungsweise:
- **Fig. 1**: eine Prinzipdarstellung, wie einzelne Module einer Fahrzeugkarosserie miteinander verbunden werden,
- **Fig. 2**: eine weitere Prinzipdarstellung, wie einzelne Module einer Fahrzeugkarosserie miteinander verbunden werden,
- **Fig. 3**: eine perspektivische Ansicht eines Vorderwagens aus Aluminium mit Adaptern zur Anbindung an eine Fahrgastzelle,
- **Fig. 4**: eine weitere perspektivische Ansicht des Vorderwagens von **Fig. 2** aus dem Blickwinkel von einer Fahrgastzelle aus und
- **Fig. 5**: eine Explosionsdarstellung eines Teils einer Fahrzeugkarosserie.

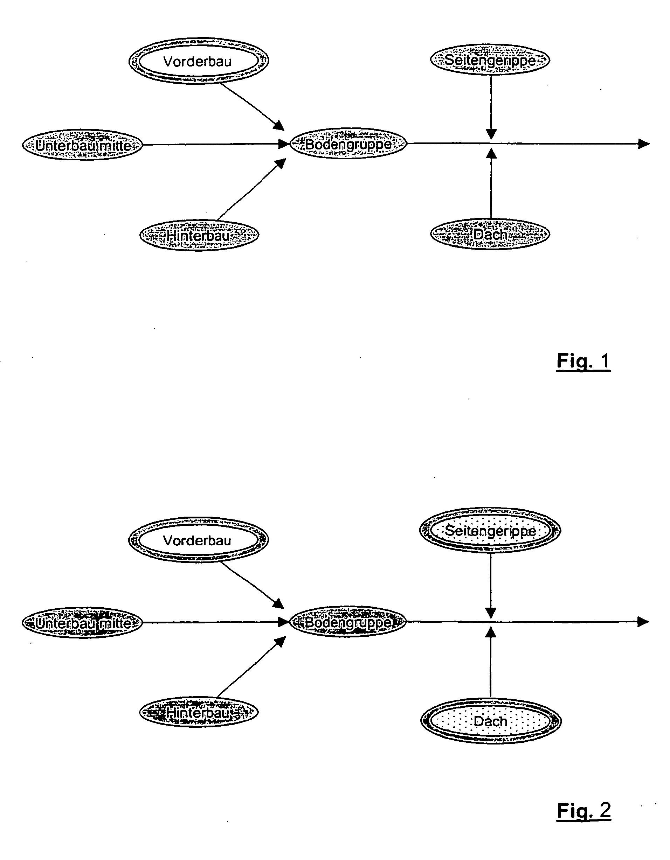

**Fig. 1** zeigt sechs Baugruppen einer Fahrzeugkarosserie: Einen Unterbau mitte, eine Bodengruppe, ein Seitengerippe, ein Dachmodul, ein Hinterbau und einen Vorderbau. Die fünf vollständig grau hinterlegten Baugruppen Unterbau mitte, Bodengruppe, Seitengerippe, Dachmodul und Hinterbau bestehen zumindest an den Verbindungsbereichen aus Stahl. Der Vorderwagen dagegen ist weiß hinterlegt und besteht aus Aluminium. Der grau hinterlegte Ring um den Vorderwagen symbolisiert, dass am Vorderwagen flächige Adapter aus Stahl angebracht sind, mit denen der Vorderwagen mit der Bodenbaugruppe überlappt und problemlos angeschweißt werden kann.

In der in **Fig. 2** gezeigten Alternative bestehen zudem das Seitengerippe und die Außenhaut des Dachmoduls aus CFK, symbolisiert durch den punktierten Hintergrund. Aber auch an diesen beiden Baugruppen sind flächige Adapter aus Stahl angebracht, symbolisiert durch den grauen Ring um die beiden Baugruppen Seitengerippe und Dachmodul. Dadurch lassen sich die einzelnen Baugruppen problemlos miteinander verschweißen, obwohl sie aus unterschiedlichen Werkstoffen bestehen. Es sind trotz der unterschiedlichen Werkstoffe keine spezifischen Anpassungen erforderlich, um die Baugruppen miteinander verbinden zu können. Die Fertigung einer Fahrzeugkarosserie ist damit flexibel in Bezug auf Materialwechsel im Rahmen eines Baugruppenwechsels. Zudem kann jede der Baugruppen vorab vormontiert werden und als Unterzusammenbau zur Verbindung mit den anderen Baugruppen angeliefert werden.

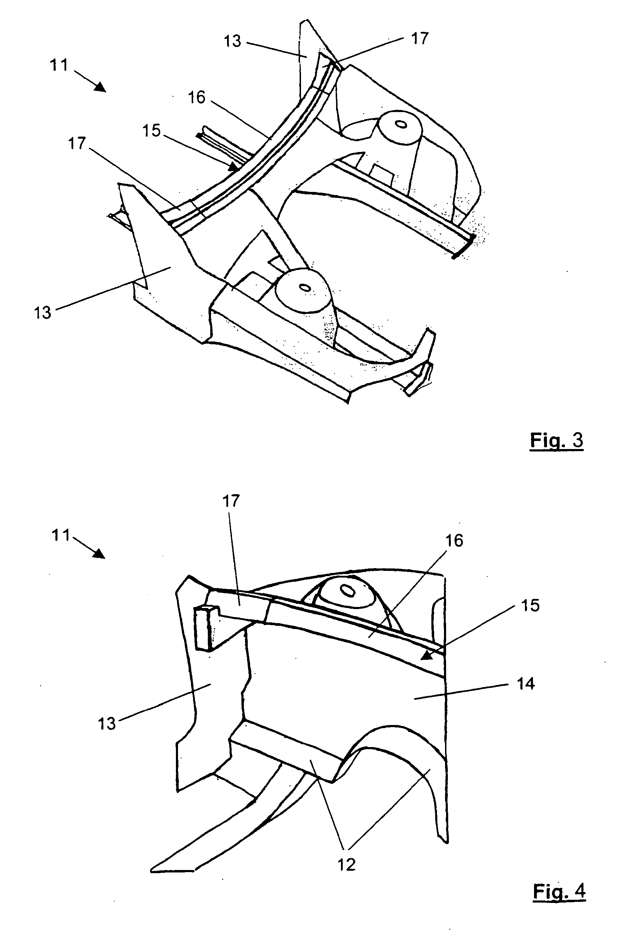

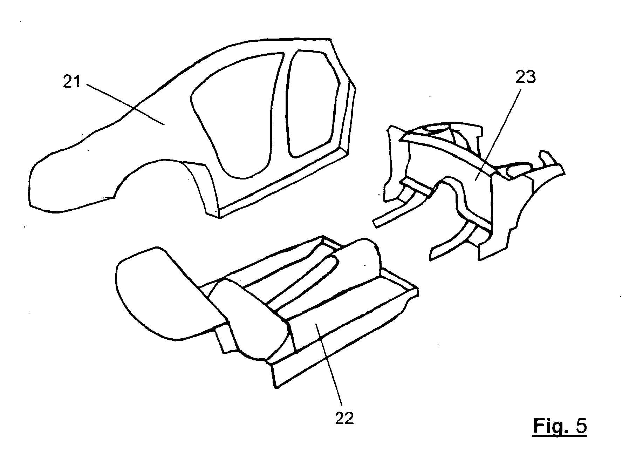

In den Figuren **Fig. 3** und **Fig. 4** ist ein Vorderwagen 11 eines Personenkraftwagens als eine Baugruppe aus Aluminium dargestellt. Der Vorderwagen 11 soll mit einer Fahrgastzelle aus Stahlblech als weitere, nicht dargestellte Baugruppe verbunden werden. Um eine schnelle und problemlose Anbindung des Vorderwagens 11 an die Fahrgastzelle an einer Rohbaumontagelinie zu ermöglichen, sind an dem Vorderwagen 11 mehrere flächige Adapter 12, 13 aus Stahlblech angebracht. Diese flächigen Adapter 12, 13 können mittels gängigen Schweißtechniken, wie beispielsweise Punktschweißen, im Überlappungsbereich mit der Fahrgastzelle verbunden werden. Damit verlagert sich das Problem, eine Verbindung zwischen Aluminium und Stahl zu schaffen, weg von der Verbindung zwischen Vorderwagen 11 und Fahrgastzelle hin zur Verbindung zwischen den flächigen Adaptern 12, 13 und dem Vorderwagen 11.

Die Anbringung der flächigen Adapter 12, 13 an den Vorderwagen 11 erfolgt im Rahmen eines Unterzusammenbaus, sodass an der eigentlichen Rohbaumontagelinie zur Anbringung des Vorderwagens 11 an die Fahrgastzelle nur die flächigen Adapter 12, 13 aus Stahlblech an die Fahrgastzelle aus Stahl geschweißt werden müssen.

Der Adapter 12 bildet die Unterkante einer Stirnwand 14 des Vorderwagens 11. Die beiden Adapter 13 stellen einen Abschnitt einer A-Säule dar. Im Rahmen des Fügeprozesses des Vorderwagens 11 werden diese Adapter 12, 13 an den restlichen Vorderwagen 11 so überlappend angeklebt, dass sich zwischen dem Stahlblech der Adapter 12, 13 und dem Aluminium des restlichen Vorderwagens überall eine Klebstoffschicht befindet, sodass das Aluminium nicht mit dem Stahlblech in Berührung kommt. Die Vermeidung des direkten Kontakts von Aluminium und Stahlblech ist aus Korrosionsschutzgründen erforderlich. Die frisch anklebten Adapter 12, 13 werden zusätzlich mit dem Vorderwagen 11 mit Stanznieten verbunden. Die Stanznieten erhöhen die Festigkeit der Verbindung und ermöglichen eine weitere Verarbeitung des Vorderwagens 11 mit den Adaptern 12, 13, auch wenn der Klebstoff noch nicht vollständig ausgehärtet ist.

Der untere Windlauf 15 zwischen den beiden von den Adaptern 13 gebildeten A-Säulen ist dreigeteilt. Er besteht aus einem mittleren Abschnitt 16 aus Aluminium und jeweils einem kurzen, als Adapter dienenden Randbereich 17 aus Stahl, der mit dem mittleren Abschnitt 16 reibverschweißt ist. Dadurch kann der Windlauf 15 als ein Bauteil mit den beiden Adaptern 13, die die A-Säulen bilden, konventionell verschweißt werden.

Der Unterzusammenbau des Vorderwagens 11 inklusive der Anbringung der Adapter 12, 13 erfolgt entkoppelt von der Rohbaumontagelinie. Er erfolgt räumlich getrennt in einer separaten Halle, da der Schmutz, der in der Halle mit der Rohbaumontagelinie entsteht, keine saubere Verklebung ermöglichen würde. In der separaten Halle dagegen herrscht die erforderliche Reinheit, um prozesssicher die Adapter 12, 13 mit dem restlichen Vorderwagen 11 zu verkleben, ohne dass Klebeflächen so verschmutzen, dass die Qualität der Verklebung beeinträchtigt werden würde.

Das beschriebene Prinzip zur Anbindung des Vorderwagens an die Fahrgastzelle lässt sich analog allgemein zur Verbindung von Baugruppen einer Fahrzeugkarosserie anwenden. So kann beispielsweise - wie in **Fig. 5** gezeigt - die Fahrgastzelle ein Seitenwandmodul 21 und eine Bodenbaugruppe 22 aufweisen, an die der Vorderwagen 23 anbringbar ist. Die Verbindung der Baugruppen 21, 22, 23 untereinander erfolgt dabei jeweils über Punktschweißverbindungen. Damit jede Baugruppe 21, 22, 23 entsprechend verschweißbar ist, ist an denjenigen Baugruppen, die aus einem nicht schweißbaren Werkstoff bestehen, jeweils zumindest ein schweißbarer flächiger Adapter im Rahmen eines Unterzusammenbaus angebracht worden, mit dem die Baugruppe mit den anderen im Überlappungsbereich verschweißbar ist.

## Patentansprüche

1. Fahrzeugkarosserie mit zumindest einem Verbindungsbereich zwischen zumindest einer ersten und einer zweiten Baugruppe, wobei zumindest an die erste Baugruppe (11) im Verbindungsbereich zumindest ein flächiger Adapter (12, 13) angebracht ist, der mit der zweiten Baugruppe oder einem an der zweiten Baugruppe angebrachten flächigen Adapter überlappt und im Überlappungsbereich verschweißt ist, **dadurch gekennzeichnet, dass** die erste und zweite Baugruppe (11) aus unterschiedlichen Werkstoffen bestehen, und dass die erste Baugruppe ein Vorderwagenmodul (11) aus einem Leichtmetalwerkstoff ist, das an eine Fahrgastzelle als zweite Baugruppe angebunden ist.

2. Fahrzeugkarosserie nach Anspruch 1, **dadurch gekennzeichnet, dass** zumindest eine Baugruppe in einem ersten Fertigungsprozess zusammengesetzt wird, bevor sie mit der anderen Baugruppe in einem zweiten Fertigungsprozess verbunden wird.

3. Fahrzeugkarosserie nach einem der vorhergehenden Ansprüche, **dadurch gekennzeichnet, dass** zumindest ein Adapter (12, 13) an einer Baugruppe (11) mit einer Verklebung oder einer Verklebung und mit Nieten angebracht ist.

4. Fahrzeugkarosserie nach Anspruch 3, **dadurch gekennzeichnet, dass** durch die Klebstoffschicht ein direkter Kontakt zwischen Adapter (12, 13) und der Baugruppe (11) vermieden wird.

5. Fahrzeugkarosserie nach einem der vorhergehenden Ansprüche, **dadurch gekennzeichnet, dass** der an der ersten Baugruppe (11) angebrachte Adapter (12, 13) und die zweite Baugruppe oder der an der zweiten Baugruppe angebrachte Adapter miteinander punktverschweißt sind.

6. Fahrzeugkarosserie nach einem der vorhergehenden Ansprüche, **dadurch gekennzeichnet, dass** zumindest eine Baugruppe eine Fahrgastzelle, ein Vorderwagenmodul (11), ein Hinterwagenmodul oder ein Frontendmodul ist.

7. Fahrzeugkarosserie nach einem der vorhergehenden Ansprüche, **dadurch gekennzeichnet, dass** das Vorderwagenmodul (11) aus einem Leichtmetallwerkstoff besteht.

8. Fahrzeugkarosserie nach Anspruch 7, **dadurch gekennzeichnet, dass** die Fahrgastzelle aus einem Eisenwerkstoff, insbesondere aus Stahlblech und ggfs. einzelnen Gussteilen besteht.

9. Fahrzeugkarosserie nach einem der Ansprüche 7 oder 8, **dadurch gekennzeichnet, dass** zumindest ein Adapter (12, 13) ein Stahlblechstreifen ist.

10. Fahrzeugkarosserie nach Anspruch 9, **dadurch gekennzeichnet, dass** der Stahlblechstreifen (12, 13) an das Vorderwagenmodul (11) angeklebt oder angeklebt und vernietet ist.

11. Fahrzeugkarosserie nach einem der vorhergehenden Ansprüche, **dadurch gekennzeichnet, dass** das Vorderwagenmodul (11) eine Stirnwand und eine A-Säule umfasst.

12. Fahrzeugkarosserie nach Anspruch 11, **dadurch gekennzeichnet, dass** zumindest Teilbereiche der A-Säule als Adapter (13) aus Stahlblech ausgeführt sind.

13. Fahrzeugkarosserie nach Anspruch 11 oder 12, **dadurch gekennzeichnet, dass** am unteren Randbereich der Stirnwand zumindest ein Adapter (12) aus Stahlblechstreifen angebracht ist.

14. Fahrzeugkarosserie nach zumindest einem der Ansprüche 7 bis 13, **dadurch gekennzeichnet, dass** zumindest ein Adapter (12, 13) mit der Fahrgastzelle punktverschweißt ist.

## Claims

1. A vehicle body comprising at least one connecting region between at least a first and a second sub-assembly, wherein at least one flat adapter (12, 13) is attached at least to the first group (11) in the connecting area and overlaps the second sub-assembly or a flat adapter attached thereto and is welded in the overlapping region, **characterised in that** the first and second sub-assembly (11) are made of different materials and the first sub-assembly is a car front module (11) made of a light-metal material and attached to a second sub-assembly in the form of a passenger compartment.

2. A vehicle body according to claim 1, **characterised in that** at least one sub-assembly is assembled in a first production process before being connected to the other sub-assembly in a second production process.

3. A vehicle body according to any of the preceding claims, **characterised in that** at least one adapter (12, 13) is attached to a sub-assembly (11) by riveting and/or sticking.

4. A vehicle body according to claim 3, **characterised in that** the layer of adhesive prevents direct contact between the adapter (12, 13) and the sub-assembly (11).

5. A vehicle body according to any of the preceding claims, **characterised in that** the adapter (12, 13) attached to the first sub-assembly (11) is spot-welded to the second sub-assembly or to the adapter attached thereto.

6. A vehicle body according to any of the preceding claims, **characterised in that** at least one sub-assembly is a passenger compartment, a car front module (11), a car rear module or a front end module.

7. A vehicle body according to any of the preceding claims, **characterised in that** the car front module (11) is made of a light-metal material.

8. A vehicle body according to claim 7, **characterised in that** the passenger compartment is made of an iron material, especially sheet steel and individual cast parts if required.

9. A vehicle body according to claim 7 or claim 8, **characterised in that** at least one adapter (12, 13) is a sheet-steel strip.

10. A vehicle body according to claim 9, **characterised in that** the sheet-steel strip (12, 13) is riveted and/or stuck to the car front module (11).

11. A vehicle body according to any of the preceding claims, **characterised in that** the car front module (11) comprises an end wall and an A-column.

12. A vehicle body according to claim 11, **characterised in that** at least parts of the A-column are in the form of a sheet steel adapter (13).

13. A vehicle body according to claim 11 or claim 12, **characterised in that** at least one sheet-steel strip adapter (12) is mounted on the bottom edge region of the end wall.

14. A vehicle body according to at least one of claims 7 to 13, **characterised in that** at least one adapter (12, 13) is spot-welded to the passenger compartment.

## Revendications

1. Carrosserie de véhicule comportant au moins une zone de liaison entre au moins un premier et un deuxième ensemble avec au moins un adaptateur plat (12, 13) qui chevauche le deuxième ensemble ou un adaptateur plat posé sur le deuxième ensemble, et soudé dans la zone de chevauchement, en étant monté au moins sur le premier ensemble (11) dans la zone de liaison,
**caractérisée en ce que**
le premier et le deuxième ensembles (11) sont constitués de matières différentes et le premier ensemble est un module de partie avant (11) en métal léger relié à un habitacle en tant que deuxième ensemble.

2. Carrosserie de véhicule selon la revendication 1,
**caractérisée en ce qu'**
au moins un ensemble est assemblé au cours d'un premier process de fabrication avant d'être relié à l'autre au cours d'un deuxième process de fabrication.

3. Carrosserie de véhicule selon l'une quelconque des revendications précédentes,
**caractérisée en ce qu'**
un adaptateur (12, 13) est monté sur un ensemble (11) par collage ou par collage et avec des rivets.

4. Carrosserie de véhicule selon la revendication 3,
**caractérisée en ce que**
la couche de colle permet d'éviter un contact direct entre les adaptateurs (12, 13) et l'ensemble (11).

5. Carrosserie de véhicule selon l'une quelconque des revendications précédentes,
**caractérisée en ce que**
l'adaptateur (12, 13) monté sur le premier ensemble (11), et le deuxième ensemble ou l'adaptateur monté sur le deuxième ensemble sont soudés entre eux par points.

6. Carrosserie de véhicule selon l'une quelconque des revendications précédentes,
**caractérisée en ce qu'**
au moins un ensemble est un habitacle, un modèle de partie avant (11), un module de partie arrière ou un modèle d'extrémité frontal.

7. Carrosserie de véhicule selon l'une quelconque des revendications précédentes,
**caractérisée en ce que**
le module de partie avant (11) est constitué d'un métal léger.

8. Carrosserie de véhicule selon la revendication 7,
**caractérisée en ce que**
l'habitacle est constitué d'une matière ferreuse, en particulier de tôle en acier et, le cas échéant, de différentes parties en fonte.

9. Carrosserie de véhicule selon l'une quelconque des revendications 7 ou 8,
**caractérisée en ce qu'**
au moins un adaptateur (12, 13) est une bande de tôle en acier.

10. Carrosserie de véhicule selon la revendication 9,
**caractérisée en ce que**
la bande de tôle en acier (12, 13) est collée sur le module de partie avant (11) ou collée et rivetée.

11. Carrosserie de véhicule selon l'une quelconque des revendications précédentes,
**caractérisée en ce que**
le module de partie avant (11) comporte une paroi avant et une colonne A.

12. Carrosserie de véhicule selon la revendication 11,
**caractérisée en ce qu'**
au moins des zones partielles de la colonne A sont en forme d'adaptateurs (13) en tôle d'acier.

13. Carrosserie de véhicule selon la revendication 11 ou la revendication 12,
**caractérisée en ce qu'**
au moins un adaptateur (12) constitué d'une bande de tôle d'acier, est monté sur la zone marginale inférieure de la paroi avant.

14. Carrosserie de véhicule selon au moins l'une quelconque des revendications 7 à 13,
**caractérisée en ce qu'**
au moins un adaptateur (12, 13) est soudé par points à l'habitacle.
